# EUROPÄISCHE PATENTANMELDUNG

(11) **EP 2 399 792 A2**
(43) Veröffentlichungstag der Anmeldung: **28.12.2011**
(21) Anmeldenummer: 11167861.1
(22) Anmeldetag: 27.05.2011
(51) Int. Cl.: B60T 13/14, B60T 8/40, B60T 13/68

(54) **Betätigungseinheit für ein hydraulisches Bremssystem sowie Steuergerät und Verfahren zu deren Betrieb**

(30) Priorität: 28.06.2010 DE 102010030601
(71) Anmelder: Robert Bosch GmbH, 70442 Stuttgart (DE)
(72) Erfinder: Kirschner, Martin, 87544 Blaichach (DE)

(57) **Zusammenfassung**

Die Erfindung betrifft eine Betätigungseinheit (47) für ein hydraulisches Bremssystem (48), welches einen Bremsdruckgeber (2) sowie eine Drucksteuereinrichtung (1) zur Druckeinstellung in einer Betätigungskammer (22) des Bremsdruckgebers (2) umfasst. Die Drucksteuereinrichtung (1) ist mit dem Bremsdruckgeber (2) hydraulisch verbunden und weist wenigstens ein erstes Schaltventil (37) sowie wenigstens ein erstes Regelventil (42) auf, mittels derer ein Druck in der Betätigungskammer (22) aufgebaut wird, sowie wenigstens ein zweites Schaltventil (45) sowie wenigstens ein zweites Regelventil (44) auf, mittels derer ein Druck in der Betätigungskammer (22) abgebaut wird.
Die Erfindung betrifft weiter ein Steuergerät zum Betreiben der Betätigungseinheit (47) und ein Verfahren zum Betreiben der Betätigungseinheit (47).

## Beschreibung

### Stand der Technik

Dokument EP 1 569 834 B1 offenbart einen Fahrzeugbremskraftverstärker, der eine Druckfluidquelle, und ein Verstärkergehäuse umfasst. Eine Druckfluidleitung verbindet die Druckfluidquelle mit einer Verstärkungskammer. Außerdem weist der Fahrzeugbremskraftverstärker ein normalerweise geschlossenes elektromagnetisch betätigbares Ventil zwischen der Quelle und der Fluidleitung zur Steuerung der Druckfluidversorgung durch die Leitung zur Verstärkungskammer auf. Des Weiteren offenbart das Dokument ein normalerweise geöffnetes elektromagnetisch betätigbares Ventil, das mit der Fluidleitung verbunden ist, um Druckfluid gezielt aus der Verstärkungskammer abzulassen.

### Offenbarung der Erfindung

Die vorliegende Erfindung befasst sich mit einer Betätigungseinheit für ein hydraulisches Bremssystem. Die Betätigungseinheit umfasst einen Bremsdruckgeber, sowie eine Drucksteuereinrichtung zur Druckeinstellung in einer Betätigungskammer des Bremsdruckgebers. Die Drucksteuereinrichtung ist mit dem Bremsdruckgeber hydraulisch verbunden. Die Drucksteuereinrichtung umfasst wenigstens ein erstes Schaltventil sowie wenigstens ein erstes Regelventil. Mittels des ersten Schaltventils sowie des ersten Regelventils kann ein Druck in der Betätigungskammer aufgebaut werden. Ebenso umfasst die Drucksteuereinrichtung wenigstens ein zweites Schaltventil sowie wenigstens ein zweites Regelventil. Mittels des wenigstens einen zweiten Schaltventils sowie des wenigstens einen zweiten Regelventils kann ein Druck in der Betätigungskammer abgebaut werden. Eine solche Betätigungseinheit kann in hydraulischen Bremssystemen eingesetzt werden. Dabei ist vorteilhaft, dass mittels der Betätigungseinheit, also mittels der Drucksteuereinrichtung und des Bremsdruckgebers, ein Druck im hydraulischen Bremssystem eingestellt werden kann. Wie bereits erwähnt kann ein Druck im hydraulischen Bremssystem aufgebaut und ebenso abgebaut werden. Die Drucksteuereinrichtung zur Druckeinstellung in der Betätigungskammer, führt zum Aufbau einer Bremskraft des Kraftfahrzeugs. Dadurch, dass mittels der Drucksteuereinrichtung der Druck in der Betätigungskammer des Bremsdruckgebers eingestellt werden kann, kann die Bremskraft des hydraulischen Bremssystems ebenso eingestellt werden. Durch Vorsehen des wenigstens einen ersten Schaltventils sowie des wenigstens einen ersten Regelventils zum Druckaufbau sowie des wenigstens einen zweiten Schaltventils und des wenigstens einen zweiten Regelventils zum Druckabbau können Druckaufbau sowie Druckabbau separat geregelt werden.

In weiterer Ausgestaltung der erfindungsgemäßen Betätigungseinheit weist die Drucksteuereinrichtung wenigstens ein drittes Schaltventil sowie wenigstens ein drittes Regelventil auf. Mittels des wenigstens einen dritten Schaltventils sowie des wenigstens einen dritten Regelventils ist die Drucksteuereinrichtung in einen von wenigstens zwei Betriebsmodi schaltbar. Durch die Möglichkeit, unterschiedliche Betriebsmodi der Betätigungseinheit einzustellen, ist die Betätigungseinheit variabel einsetzbar. So ist beispielsweise ein Betriebsmodus darstellbar, welcher einer regulären Bremsung entspricht, sowie ein zweiter Betriebsmodus, welcher einer Rückfallsituation entspricht. Unter einer Rückfallsituation ist beispielsweise eine Situation zu verstehen, in welcher die Betätigungseinheit nicht ordnungsgemäß funktioniert. Eine solche Rückfallsituation ist auch einem Back-Up-Modus gleichzusetzen. Vorteilhaft am Vorsehen unterschiedlicher Betriebsmodi für die Betätigungseinheit, genauer gesagt für die Drucksteuereinrichtung ist, dass selbst bei Defekt der Betätigungseinheit das Fahrzeug sicher gebremst werden kann.

In vorteilhafter Ausgestaltung der Betätigungseinheit ist das erste, das zweite und das dritte Regelventil ein stromlos geöffnetes Regelventil. Ein solches Regelventil ist in unbestromten Zustand geöffnet. Vorteilhaft bei der Verwendung stromlos offener Regelventile ist, dass ein stromlos offenes Regelventil wesentlich einfacher als Regelventil auszuführen ist, im Gegensatz zu stromlos geschlossenem Regelventil. Dies kann unter anderem auch fertigungsbedingt sein, da sich ein stromlos geschlossenes Regelventil schwerer abgleichen bzw. einstellen lässt.

In weiterer Ausgestaltung der Betätigungseinheit ist vorgesehen, dass das erste, zweite und dritte Schaltventil ein stromlos geschlossenes Schaltventil ist. Sowohl durch die Wahl des ersten, zweiten und dritten Regelventils als stromlos offenes Regelventil als auch durch die Wahl des ersten, zweiten und dritten Schaltventils als stromlos geschlossenes Schaltventil ist gewährleistet, dass für den Fall eines Stromausfalls immer noch eine Bremsung des Fahrzeugs darstellbar ist.

In weiterer Ausgestaltung der Betätigungseinheit ist vorgesehen, dass die Drucksteuereinrichtung der Betätigungseinheit für einen Druckaufbau in der Betätigungskammer der Betätigungseinheit ein viertes Schaltventil und/oder zum Druckabbau ein fünftes Schaltventil aufweist. Das vierte und fünfte Schaltventil ist ein stromlos geschlossenes Schaltventil. Durch die Wahl des vierten und fünften Schaltventils als stromlos geschlossenes Schaltventil ist wiederum in vorteilhafter Weise eine Bremsung des Fahrzeugs, selbst bei einem Stromausfall, durchführbar. Desweiteren ist vorgesehen, dass die Drucksteuereinrichtung der Betätigungseinheit zum Druckaufbau ein viertes Regelventil und/oder zum Druckabbau ein fünftes Regelventil aufweist. Das vierte und fünfte Regelventil ist dabei als stromlos geöffnetes Regelventil vorgesehen. Durch Vorsehen der zusätzlichen Schalt- und Regelventile, genauer gesagt des vierten und fünften Schaltventils, sowie des vierten und fünften Regelventils oder auch nur einzelner davon, ist es möglich, sowohl bei Druckaufbau und/oder bei Druckabbau größere Druckgradienten zu gewährleisten. Dadurch ist die Bremsdynamik, welche mittels der Betätigungseinheit darstellbar ist, in vorteilhafter Weise höher.

Die erfindungsgemäße Betätigungseinheit, genauer gesagt die Drucksteuereinrichtung der Betätigungseinheit, umfasst eine Fluidspeichervorrichtung, sowie eine Fluidfördereinrichtung. Unter einer Fluidspeichervorrichtung ist ein Speicher zu verstehen, insbesondere ein Hydraulikspeicher. Ein solcher Hydraulikspeicher kann als Faltenbalgspeicher, als Membranspeicher, sowie als weitere mögliche Ausführungsform eines Speichers vorgesehen sein. Unter einer Fluidfördervorrichtung ist beispielsweise eine Pumpe oder ein Plunger zu verstehen. Weitere Ausführungsformen der Fluidfördervorrichtung sind denkbar. In der erfindungsgemäßen Betätigungseinheit ist vorgesehen, dass die Fluidspeichervorrichtung, also der Speicher für Hydraulikflüssigkeit, mittels der Fluidfördervorrichtung, beispielsweise der Pumpe, geladen wird. Zur Aufnahme von Hydraulikflüssigkeit, also zum Laden, wird das erste Schaltventil geöffnet und das erste Regelventil geschlossen. Nach dem Aufladevorgang wird das erste Schaltventil geschlossen. Durch ein solches Einstellen der Ventile, also des ersten Schaltventils sowie des ersten Regelventils, ist der Aufladevorgang sowie das Halten von Hydraulikflüssigkeit steuer- und/oder regelbar. Ebenso wird durch adäquates Stellen der beteiligten Ventile die für den jeweiligen Vorgang notwendige hydraulische Verbindung hergestellt. So wird beispielsweise zum Laden des Hydraulikspeichers die Verbindung zwischen der Pumpe und dem Speicher hergestellt, wobei die Verbindung von der Pumpe zu der Betätigungskammer unterbrochen ist. Somit kann in vorteilhafter Weise vermieden werden, dass beim Aufladen des Hydraulikspeichers eine ungewollte Bremsung durchgeführt wird.

Die Betätigungseinheit kann, wie bereits erwähnt, durch Stellen des dritten Schaltventils sowie des dritten Regelventils in unterschiedliche Betriebsmodi gestellt werden. Ein erster Betriebsmodus wird dadurch realisiert, dass das dritte Schaltventil geöffnet wird und das dritte Regelventil geschlossen wird. Bei dieser Konfiguration des dritten Schalt- sowie des dritten Regelventils wird der Druck in der Betätigungskammer des Bremsdruckgebers mittels der Drucksteuereinrichtung eingestellt. Dies erfolgt durch Herstellen der hydraulischen Verbindung zwischen dem Fluidspeicher sowie der Betätigungskammer über die beteiligten Schalt- und Regelventile.

In dem zweiten Betriebsmodus wird das dritte Schaltventil geschlossen sowie das dritte Regelventil geöffnet. In diesem Betriebsmodus stellt der Fahrer direkt den Druck in der Betätigungskammer ein. Durch Stellen des dritten Regelventils kann der Fahrer mit der Betätigungskammer verbunden werden. Desweiteren ist vorgesehen, dass in dem ersten Betriebsmodus der Fahrer einen Pedalsimulator der Betätigungseinheit betätigt. Wie bereits erwähnt, ist in dem ersten Betriebsmodus die Drucksteuereinrichtung zum Druckauf- und/oder abbau in der Betätigungseinheit, genauer gesagt in der Betätigungskammer vorgesehen. Der Fahrer baut keinen Druck in der Betätigungskammer in diesem Betriebsmodus auf. Damit der Fahrer ein normales Gefühl bei der Betätigung des Bremspedals, insbesondere einen für ihn gewohnten Zusammenhang zwischen Betätigungsweg des Bremspedals sowie der dazu aufzubringenden Kraft spürt oder erfährt, ist vorgesehen, dass in dem ersten Betriebsmodus der Fahrer einen Pedalsimulator der Betätigungseinheit betätigt. Wie bereits erwähnt, ist das dritte Schaltventil im ersten Betriebsmodus geöffnet. Das dritte Schaltventil verbindet den Fahrer mit besagtem Pedalsimulator. Im zweiten Betriebsmodus kann durch Schließen des dritten Schaltventils der Fahrer vom Pedalsimulator entkoppelt werden. Somit ist gewährleistet, dass in vorteilhafter Weise der Fahrer mit seiner gesamten Betätigungskraft die Bremsung durchführen kann, ohne dass er dabei zusätzlich den Pedalsimulator betätigen muss.

In weiterer Ausgestaltung der erfindungsgemäßen Betätigungseinheit ist vorgesehen, dass der Druck in der Betätigungskammer im ersten Betriebsmodus durch selbsttätiges Abgeben von Hydraulikfluid aus der Fluidspeichervorrichtung aufgebaut wird. Dadurch, dass der Hydraulikspeicher Hydraulikfluid auf hohem Druckniveau bevorratet, also vorweist, kann durch Stellen der Ventile, die den Hydraulikspeicher mit der Betätigungskammer verbinden, also durch Öffnen und Schließen der jeweiligen Ventile, das Druckniveau in der Betätigungskammer aufgebaut werden. Wie bereits beschrieben kann zum Druckabbau vorgesehen sein, den Druck in der Betätigungskammer über die zweiten Schalt- und Regelventile, sowie gegebenenfalls über weitere Schalt- und Regelventile abzubauen.

In weiterer Ausgestaltung der Betätigungseinheit ist diese mit einer Druckmodulationseinheit des hydraulischen Bremssystems verbunden. Unter einer solchen Druckmodulationseinheit ist beispielsweise ein Hydraulikaggregat zu verstehen, beispielsweise ein ABS- und/oder ESP-Aggregat, welches den Bremsdruck abhängig von der Fahrersituation einstellen und modulieren kann. Aktive Druckeinstellungen mittels des Aggregats können vorgesehen sein. Durch das Vorsehen eines Anschlusses der Betätigungseinheit an eine solche Druckmodulationseinheit, wie sie bei vielen Fahrzeugen vorhanden ist, kann die Betätigungseinheit modular eingesetzt werden.

In weiterer Ausgestaltung ist die Betätigungseinheit Teil eines hydraulischen Bremssystems, welches selbst Teil einer Gesamtbremsanlage ist. Die Gesamtbremsanlage umfasst neben dem hydraulischen Bremssystem ein weiteres Bremssystem, beispielsweise ein regeneratives Bremssystem. Durch Einstellen eines Drucks in der Betätigungskammer des Bremsdruckgebers mittels der Drucksteuereinrichtung kann die Bremswirkung des hydraulischen Bremssystems an die Bremswirkung des regenerativen Bremssystems angepasst werden. Dies ist in sogenannten regenerativen Bremssystemen von Vorteil, da auf diese Weise das regenerative Bremsmoment optimal zur Energierückgewinnung bei einer Bremsung verwendet werden kann. Außerdem kann eine vom Fahrer vorgegebene Bremswirkung unabhängig von der vorliegenden Geschwindigkeit des Fahrzeugs oder auch unabhängig vom Ladezustand eines Energiespeichers des Fahrzeugs konstant gehalten werden. Diese genannten Größen, also die Geschwindigkeit des Fahrzeugs sowie der Ladezustand des Energiespeichers sind Beispiele für Größen, welche die regenerative Bremswirkung beeinflussen können. Eine Veränderung der regenerativen Bremswirkung während einer Bremsung muss über das hydraulische Bremssystem ausgeglichen werden. Dies ist mittels der erfindungsgemäßen Betätigungseinheit in vorteilhafter Weise darstellbar. Die Gesamtbremswirkung der Gesamtbremsanlage kann durch Betreiben der Betätigungseinheit, insbesondere durch Betreiben der Drucksteuereinrichtung zumindest annähernd konstant gehalten werden. Desweiteren ist von Vorteil, dass bei einer solchen Anpassung der hydraulischen Bremswirkung an die regenerative Bremswirkung der Fahrer den Pedalsimulator betätigt und somit von einer Druckeinstellung im hydraulischen Teil des Bremssystems nichts spürt. Das hat zum Vorteil, dass eine Druckeinstellung beziehungsweise eine Druckanpassung an ein regeneratives Bremsmoment durch den Fahrer nicht als irritierende Rückwirkung am Bremspedal, beispielsweise durch Versatz des Bremspedals wahrgenommen wird. Durch adäquates Stellen der Ventile zum Druckaufbau, zum Druckabbau sowie zur Verbindung des Fahrers mit dem Pedalsimulator kann die aktuell vorliegende Betriebssituation der Gesamtbremsanlage adäquat berücksichtigt werden.

Desweiteren umfasst die Erfindung ein Steuergerät zum Betreiben der Betätigungseinheit sowie zum Betreiben des hydraulischen Bremssystems. Das Steuergerät steuert unter anderem wenigstens eines der Ventile der Drucksteuereinrichtung, die bereits genannt wurden. Vorgänge, welche mittels des Steuergeräts gesteuert werden können, sind beispielsweise der Druckaufbau, der Druckabbau, beides durchgeführt mittels der Drucksteuereinheit. Ebenso kann das Aufladen der Fluidspeichervorrichtung mittels der Fluidfördervorrichtung gesteuert werden, wobei das Steuergerät den Motor steuert, sowie die beteiligten Ventile schaltet beziehungsweise stellt. Ebenso kann die Drucksteuereinrichtung in einem ersten oder zweiten Betriebsmodus durch das Steuergerät geschaltet werden. Ebenso kann das Steuergerät den in der Betätigungskammer einzustellenden Druck anhand wenigstens einer Sensoreinheit des Bremsdruckgebers ermitteln. Der so ermittelte Druck, also der einzustellende Druck in der Betätigungskammer, kann durch das Steuergerät eingestellt werden. Dies erfolgt durch Stellen der zum Druckauf- und/oder Druckabbau notwendigen Ventile.

Des Weiteren ist vorgesehen, dass die Druckeinstellung in der Betätigungskammer durch das Steuergerät, das Befüllen der Fluidspeichervorrichtung und/oder das Ermitteln des einzustellenden Drucks in der Betätigungskammer durch das Steuergerät anhand von Signalen wenigstens einer Sensoreinheit erfolgt. Durch Berücksichtigung von Signalen wenigstens einer Sensoreinheit, also beispielsweise eines Drucksensors sowie eines Wegsensors oder mehreren Ausführungen der genannten, kann der Druckaufbau- und/oder Druckabbau in der Betätigungskammer das Befüllen der Fluidspeichervorrichtung, sowie das Ermitteln des einzustellenden Drucks in der Betätigungskammer ausgewertet, durchgeführt, insbesondere gesteuert und/oder geregelt durchgeführt werden. So kann beispielsweise mittels eines Wegsensors eine Betätigung des Bremspedals ermittelt, oder auch erfasst werden. Anhand einer solchen Betätigung des Bremspedals kann ein Bremswunsch des Fahrers ausgewertet werden. Anhand dieser Größe kann das Steuergerät den einzustellenden Druck in der Betätigungskammer des Bremsdruckgebers ermitteln. Weitere Sensoren, beispielsweise ein Kraftsensor zur Ermittlung des Fahrerbremswunschs, sind vorstellbar.

Des Weiteren ist ein Verfahren zum Betreiben der Betätigungseinheit des hydraulischen Bremssystems Teil der Erfindung. Die Betätigungseinheit umfasst einen Bremsdruckgeber sowie eine Drucksteuereinrichtung. Der Bremsdruckgeber umfasst eine Betätigungskammer. Die Drucksteuereinrichtung weist wenigstens ein erstes Schaltventil, wenigstens ein erstes Regelventil, wenigstens ein zweites Schaltventil sowie wenigstens ein zweites Regelventil auf. Der Druck in der Betätigungskammer des Bremsdruckgebers wird durch die Drucksteuereinrichtung eingestellt. Dies geschieht im erfindungsgemäßen Verfahren dadurch, dass die Drucksteuereinrichtung mit dem Bremsdruckgeber hydraulisch verbunden wird und über das wenigstens eine erste Schaltventil sowie das wenigstens eine erste Regelventil ein Druck in der Betätigungskammer ausgebaut wird, oder über das wenigstens eine zweite Schaltventil sowie das wenigstens eine zweite Regelventil ein Druck in der Betätigungskammer abgebaut wird.

In weiterer Ausgestaltung des erfindungsgemäßen Verfahrens ist vorgesehen, dass die Drucksteuereinrichtung wenigstens ein drittes Schaltventil sowie wenigstens ein drittes Regelventil aufweist und dass mittels des wenigstens einen dritten Schaltventils sowie des wenigstens einen dritten Regelventils die Betätigungseinheit in einen von wenigstens zwei Betriebsmodi geschaltet wird.
Figur 1 zeigt eine erste Ausführungsform der Betätigungseinheit für das hydraulische Bremssystem in schematischer Darstellung. Im Wesentlichen umfasst die Betätigungseinheit einen Bremsdruckgeber und eine Drucksteuereinrichtung, mittels derer unter anderem ein Druck in der Betätigungskammer des Bremsdruckgebers eingestellt werden kann.
Figur 2 zeigt eine weitere Ausführungsform der erfindungsgemäßen Betätigungseinheit. Diese Ausführungsform unterscheidet sich in der Anzahl und Art der zum Druckaufbau und/oder Druckabbau zur Verfügung stehenden Ventile von der Ausführungsform in Figur 1.

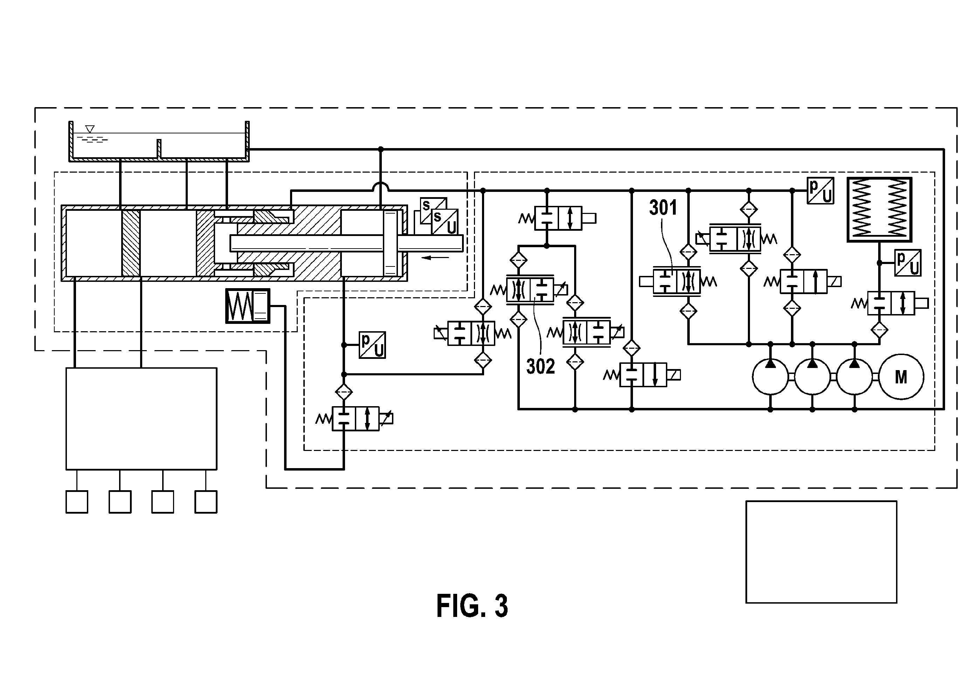

Figur 3 zeigt eine weitere Ausführungsform der erfindungsgemäßen Betätigungseinheit. Diese Ausführungsform unterscheidet sich in der Anzahl und Art der zum Druckaufbau und/oder Druckabbau zur Verfügung stehenden Ventile von der Ausführungsform in Figur 1.

Die vorliegende Erfindung befasst sich mit einer Betätigungseinheit 47 eines hydraulischen Bremssystems 48. Das hydraulische Bremssystem kann mit einem weiteren Bremssystem Teil einer Gesamtbremsanlage sein. Das weitere Bremssystem kann ein regeneratives Bremssystem sein.

Das hydraulische Bremssystem umfasst dabei die Drucksteuereinrichtung 1, einen Bremsdruckgeber 2, einen Vorratsbehälter für Hydraulikflüssigkeit 6, ein Steuergerät 5, ein Druckmodulationssystem 3 sowie wenigstens eine Radbremse 4. Des Weiteren umfasst das hydraulische Bremssystem einen Pedalsimulator 7. Die Auflistung der Komponenten des hydraulischen Bremssystems ist hierbei nicht abschließend.

Die Drucksteuereinrichtung 1 sowie der Bremsdruckgeber 2 bilden die Betätigungseinheit 47.

Mittels des Bremsdruckgebers 2, der als Kraft-Druck-Umwandlungselement fungiert, ähnlich der Funktion eines Hauptbremszylinders kann in der wenigstens einen, direkt oder indirekt an den Bremsdruckgeber 2 hydraulisch angeschlossenen Radbremse 4 ein Bremsdruck aufgebaut werden. Der Bremsdruck entsteht in Radbremszylindern, welche hier nicht genauer eingezeichnet sind. Eine indirekte hydraulische Ankopplung der wenigstens einen Radbremse 4 an den Bremsdruckgeber 2 kann über ein Druckmodulations-System 3 erfolgen. Ein solches Druckmodulations-System kann dazu vorgesehen sein, den Bremsdruck in dem Radbremszylinder des wenigstens einen angeschlossenen Rades 4, ggf. unabhängig von einem vorliegenden Bremsdruck in weiteren an das Druckmodulations-System angeschlossenen Rädern, einzustellen. Ebenso kann über das Druckmodulations-System 3 auch ein Bremsdruck in der wenigstens einen Radbremse 4 unabhängig vom Fahrer eingestellt werden. Ein solches System ist beispielsweise als ein ESP- oder ABS-Hydraulikaggregat aus dem Stand der Technik bekannt.

In der Regel betätigt der Fahrer um eine Entschleunigung des Fahrzeugs, also eine Bremsung einzuleiten das Bremspedal. Ebenso kann vorgesehen sein, dass der Fahrer anstatt eines Bremspedals einen Bremshebel betätigt. Über ein solches Bremspedal oder einen Bremshebel verschiebt der Fahrer ein Eingangselement 8 des Bremsdruckgebers 2 mit einer Eingangskraft 9. Dadurch verschiebt der Fahrer das Eingangselement 8, wobei mittels einer Sensorik 10 die Verschiebung ausgewertet werden kann. Eine ausgewertete Größe kann dabei beispielsweise ein Verstellweg des Eingangselements 8 oder eine Eingangskraft 9 sein. Je nach Auslegung ist die Sensorik 10 ein Kraftsensor, oder ein Wegsensor. Aus Verstellweg und/oder Eingangskraft 9 lässt sich ein Bremswunsch des Fahrers ableiten. Unter Bremswunsch ist dabei eine Vorgabe Fahrzeugverzögerung anhand einer Pedalstellung des Bremspedals, also eines Verstellwegs des Eingangselements 8 zu verstehen, oder die Kraft mit der das Eingangselement beaufschlagt wird. Die Signale der Sensoreinheit 10 werden dem Steuergerät 5 zugeführt und werden dort zur Steuerung der Gesamtbremsanlage, insbesondere zur Steuerung des hydraulischen Bremssystems, des regenerativen Bremssystems, der Drucksteuereinrichtung und/oder des Druckmodulationssystems herangezogen.

Das Eingangselement 8 durchragt das Bremsdruckgebergehäuse 14 und ist an der Eingangsöffnung 13 durch die es ragt gleitend gelagert und abgedichtet. Innerhalb des Bremsdruckgebers 2 durchragt das Eingangselement 8 einen Hohlraum 12. Auf der der Eingangsöffnung 13 abgewandten Seite des Hohlraums 12, genauer gesagt der Kammer 12 befindet sich im Gehäuse 14 des Bremsdruckgebers 2 in einer Wandung 16 eine Bohrung 15 die das Eingangselement 8 wieder gleitend und abgedichtet führt. Des Weiteren weist das Eingangselement eine Ausbildung 11 auf, mittels derer das Eingangselement 8 in der ersten Kammer 12 des Bremsdruckgebers 2 verschiebbar geführt wird. Insbesondere ist das Eingangselement durch die Ausbildung 11 gleitend in der ersten Kammer 12 gelagert. Dabei kann vorgesehen sein, dass die Ausbildung 11 gegen das Gehäuse 14 in der Kammer 12 dichtet, also mediendicht abschließt. Die Ausbildung 11 kann beispielsweise eine Ausformung, ein zusätzliches Ansatzstück oder ähnliche Ausgestaltungen haben. Es ist nicht zwingend notwendig, dass die Ausbildung 11 und Eingangselement 8 einteilig ausgeführt sind. Die Kammer 12 des Bremsdruckgebers 2 wird durch die Ausbildung 11 in einen ersten Teil 12a sowie einen zweiten Teil 12b unterteilt. Die Volumina des ersten Teils 12 a und des zweiten Teils 12b der Kammer 12 sind durch Versetzen des Eingangselements 8 veränderbar.

Die Kammer 12 ist über eine Leitung 46 an die Leitung 40 und somit an das Reservoir 6 angeschlossen. Auf diese Weise ist die Funktion der ersten Kammer 12 ähnlich der Funktion eines Hauptbremszylinders. Volumen an Bremsflüssigkeit wird über die Leitung 46 aus dem Reservoir 6 der Kammer 12 zur Verfügung gestellt. Beim Betätigen der Bremse, insbesondere des Eingangselements 8 wird die Bohrung, an der die Leitung 46 angeschlossen ist mittels der Ausbildung 11 überfahren. Dadurch ist der zweite Teil 12a der Kammer 12 vom Reservoir 6 abgetrennt und es kann Druck aufgebaut werden.

Die Wandung 16 des Bremsdruckgebers teilt den Bremsdruckgeber im Wesentlichen in zwei Kammern, wovon eine Kammer die eben erwähnte erste Kammer 12 ist. Die zweite Kammer beinhaltet unter anderem zwei Kolben 17a und 17b welche zusammen mit dem Gehäuse 14 zwei Ausgangskammern 18a und 18b bilden. In bekannter Weise wird über die Kolben 17a und 17b Hydraulikflüssigkeit in Richtung des wenigstens einen angeschlossenen Rades 4 verschoben. Ebenso kann durch einen Versatz der Kolben 17a und 17b in Richtung der Eingangskammer 12 wieder Volumen an Hydraulikflüssigkeit in die Kammern 18a und 18b aufgenommen werden. Zur Aufnahme und Abgabe an Hydraulikflüssigkeit sind an die Kammern 18a und 18b jeweils Hydraulikleitungen 19a und 19b angeschlossen. Eventuell benötigte Rückstellfedern sowie eine Fesselung der zwei Kolben sind hier nicht eingezeichnet. Je nach Bedarf des vorliegenden Bremssystems kann auch eine anders ausgestattete Bremsanlage, beispielsweise eine einkreisige Bremsanlage mit dem Bremsdruckgeber betrieben werden. Die Kammern 18a,b sind über Hydraulikleitungen 49a sowie 49b mit dem Reservoir 6 verbunden.

Die Wandung 16 weist einen Fortsatz 20 auf der weiterhin das Eingangselement umfasst. Zwischen Fortsatz 20 und der inneren Wand des Gehäuses 14 befindet sich ein Trennelement 21. Das Trennelement 21 ist auf dem Fortsatz sowie an der inneren Wand der zweiten Kammer gleitend gelagert und bildet eine Betätigungskammer 22. Das Trennelement 21 ist dabei in der Lage den ersten Kolben 17a über einen Ansatz 24 mit einer Kraft zu beaufschlagen, die dem Trennelement 21 beaufschlagt wird. Dabei kann eine lose Anlage des Trennelements an den Ansatz 24 ebenso vorgesehen sein, wie eine mechanische Verbindung des Trennelements 21 mit dem Ansatz 24. Der Ansatz 24 kann in unterschiedlicher baulicher Ausführung vorliegen, so zum Beispiel in Form einer Ausformung des ersten Kolben oder in Form eines zusätzlich an den ersten Kolben 17a montierten Bauteils. Der erste Kolben 17a, der Ansatz 24, der Fortsatz 20 sowie das Eingangselement 8 bilden eine Leerwegkammer 23, eine Relativbewegung in axialer Richtung des Betätigungselements 8 zum ersten Kolben 17a ermöglicht.

Der durch den ersten Kolben 17a, den Ansatz 24 sowie durch das Trennelement gebildete Raum 51 steht über eine Hydraulikleitung 50 in hydraulischer Verbindung mit dem Reservoir 6. Bei einer Bewegung des Eingangselements 8 in der Leerwegkammer 23 kann Hydraulikflüssigkeit über Öffnungen 52 im Ansatz 24 in den Raum 51 verschoben werden und von dort in das Reservoir 6. Auf diese Weise wird ein Druckaufbau oder ein Unterdruck bei einer Bewegung des Eingangselements 8 verhindert.

Der Bremsdruckgeber 2 wie er hier geschildert ist weist nun zwei Möglichkeiten auf, mittels derer der erste Kolben 17a mit einer Kraft beaufschlagt werden kann und somit Volumen an Bremsflüssigkeit in Richtung der wenigstens einen Radbremse bringt, und somit einen Druckaufbau hervorruft, was zu einer Bremsung führt. Zum einen kann der Fahrer über das Eingangselement 8 den ersten Kolben 17a, direkt und/oder indirekt, beaufschlagen. Zum anderen kann eine Kraft über das Trennelement 21 und den Ansatz 24 dem ersten Kolben 17a beaufschlagt werden. Man spricht dann auch von einer Hilfskraft- oder Fremdkraftbremsung. Um diese Hilfskraft aufzubringen wird in der Betätigungskammer 22 ein Druck mittels der Drucksteuereinrichtung 1 aufgebaut. Zu diesem Zweck weist die Betätigungskammer 22 eine hydraulische Verbindung, beispielsweise in Form einer Hydraulikleitung 25 zu der Drucksteuereinrichtung 1 auf. Eine Druckänderung in der Kammer 22 führt zu einer Erhöhung oder Reduktion der Kraft, die auf das Trennelement 21 wirkt, was zu einem Versatz des Trennelements und somit zu einem Versatz des ersten Kolbens 17a führt.

Durch Einstellen des in der Kammer 22 vorherrschenden Drucks mittels der Drucksteuereinrichtung 1 kann die dem ersten Kolben 17a beaufschlagte Kraft eingestellt werden.

Wird der Druck in der Betätigungskammer 22 durch die Drucksteuereinrichtung 1 aufgebaut, so ist eine Kraftübertragung von Eingangselement 8 auf den ersten Kolben 17a nicht vorgesehen. Der Fahrer betätigt zwar die Bremsanlage durch einen Versatz des Eingangselements 8 in Richtung des ersten Kolbens 17a, gelangt jedoch mit diesem nicht in Anlage. Bei Verschieben des Eingangselements 8 verschiebt sich auch die Ausbildung 11 in der ersten Kammer 12 und verschiebt dabei Volumen an Hydraulikflüssigkeit aus der ersten Kammer 12, genauer gesagt aus dem ersten Teil 12a in eine Leitung 26. Die Leitung 26 verbindet die Kammer 12 mit einem Pedalsimulator 7.

Die Hydraulikleitung 26 ist an einem Verzweigungspunkt 28 mit einer Hydraulikleitung 29 verbunden, die die Hydraulikleitung 26 mit der bereits erwähnten Hydraulikleitung 25 verbindet. Zwischen der ersten Kammer 12und dem Verzweigungspunkt 28 ist ein Drucksensor 33 an die Leitung 26 angeschlossen. Zwischen dem Verzweigungspunkt 28 und dem Pedalsimulator 7 befindet sich in der Leitung 26 ein stromlos geschlossenes Schaltventil 30. Das Ventil 30 erlaubt in seiner Durchlassstellung einen Fluss an Hydraulikflüssigkeit in beide Richtungen.

Durch das Ventil 30 ist die erste Kammer unterbrechbar hydraulisch mit dem Pedalsimulator 7 verbunden. Durch Schalten des Ventils 30 kann somit eingestellt werden, ob der Fahrer in den Pedalsimulator 7 einbremst, oder nicht. Der Pedalsimulator 7 ist dazu ausgelegt, die aus der Kammer 12 verdrängte Hydraulikflüssigkeit aufzunehmen, wobei durch die Aufnahme an Hydraulikflüssigkeit ein elastisches Element 32 deformiert wird, wodurch dem Fahrer eine Rückwirkung bei der Betätigung der Bremsanlage vermittelt wird. Auf die Funktion des Pedalsimulators 7 wird hier nicht weiter eingegangen. Dazu muss das Ventil 30 geöffnet sein.

In einer Situation, in der es erforderlich ist, dass der Fahrer zur Betätigung des ersten Kolbens beiträgt, also in Form eines Kraftübertrags kann die Verbindung 26 von der ersten Kammer 12 zum Pedalsimulator 7 unterbrochen werden, indem das Ventil 30 geschlossen wird. Dann verschiebt der Fahrer bei einer Betätigung des Eingangselements 8 die Hydraulikflüssigkeit über die Leitung 26 in die Leitung 29 und von dort aus über die Leitung 25 in die Betätigungskamme 22. Dadurch kann in der Betätigungskammer 22 durch den Fahrer direkt ein Druck aufgebaut werden. Ein solcher Druckaufbau kann beispielsweise bei einem Ausfall einer weiteren zu Betätigung der Bremsanlage vorgesehenen Druckquelle, notwendig sein, wie beispielsweise die weiter unten beschriebene Drucksteuereinrichtung 1. Die so eben genannten Hydraulikleitungen 25, 26, 29 sind ganz oder teilweise Teil der Drucksteuereinrichtung 1. Der Drucksensor 33 sowie das Ventil 30 sind ebenfalls Teil der Bremsdrucksteuereinrichtung 1.

In manchen Betriebssituationen, so zum Beispiel im Fall einer Leckage der Verstärkerkammer 22, ist eine mechanische Kopplung von Eingangselement 8 an den ersten Kolben 17a möglich, indem das Eingangselement mit dem Kolben 17a in Anlage gelangt und diesen mit einer Kraft beaufschlagt. So kann auch bei Leckage die Bremsanlage betätigt werden und eine Bremsung, gegebenenfalls mit geringerer Bremskraft, durchgeführt werden.

In der Hydraulikleitung 29 befindet sich ein weiteres Ventil 31. Das Ventil 31 ist bei einer normalen Bremsung ohne Kraftbeitrag bei der Beauschlagung des ersten Kolbens 17a durch den Fahrers geschlossen und wird im beschriebenen Backup-Modus bei Ausfall der Drucksteuereinrichtung geöffnet, beziehungsweise ist bereits offen, da es als stromlos offenes Ventil ausgelegt ist. Das Ventil 31 ist ein stromlos offenes Regelventil. Das Ventil 31 erlaubt in seiner Durchlassstellung einen Fluss an Hydraulikflüssigkeit in beide Richtungen.

Mittels der Ventile 30 und 31 kann somit der Fahrer entweder den Pedalsimulator 7 oder den ersten Kolben 17a mit einer Kraft beaufschlagen. Durch Steuern beziehungsweise Stellen der Ventile 30 und 31 kann somit zwischen einem Backup Modus der Bremsanlage und einem normalen Modus, in dem lediglich der Fahrer einen Bremswunsch vorgibt umgeschaltet werden. Somit ist eine Bremsanlage realisierbar, welche in dem normalen Modus einer Brake by Wire Anlage entspricht, welche einen mechanischen Rückfallmodus aufweist.

Die Drucksteuereinrichtung 1 umfasst neben den bereits genannten Ventilen 30 und 31 des Weiteren eine Druckquelle, mittels derer der für eine Bremsung notwendige Druck in der Betätigungskammer 22 aufgebaut wird. Druckquelle ist dabei über die Leitung 25 mit der Betätigungskammer 22 verbunden. Die Druckquelle umfasst im wesentlichen zwei Elemente, zum ersten eine Pumpe 34 sowie einen Hydraulikspeicher 35. Der Hydraulikspeicher kann beispielsweise ein Faltenbalgspeicher sein. Weitere Arten von Hydraulikspeichern sind denkbar. Die Pumpe 34 ist hier als drei Kolben Pumpe gezeigt, jedoch nicht auf diese Ausführungsform beschränkt. Die Kolben der Pumpe werden durch einen Motor 36 angetrieben. Der Motor 36 kann dabei von der Steuereinheit 5 gesteuert werden.

Im Wesentlichen ist der Hydraulikspeicher dazu ausgelegt Volumen an Bremsflüssigkeit aufzunehmen und dieses unter erhöhtem Druck im Vergleich zum Druckniveau außerhalb des Speichers zu halten. Die Bremsflüssigkeit kann dem Hydraulikspeicher 35 durch die Pumpe 34 zugeführt werden. Ebenso ist es denkbar, sofern das Druckniveau außerhalb des Speichers höher ist als innerhalb des Speichers, dass der Speicher 35 die Hydraulikflüssigkeit selbsttätig aufnimmt.

Wird der Hydraulikspeicher durch die Pumpe geladen, so muss die Pumpe über ihre Ansaugseite Volumen an Bremsflüssigkeit aufnehmen. Dazu ist die Pumpe 34 über eine Leitung 39 der Leitung 25 sowie mit der Betätigungskammer 22 verbunden. Ebenso ist die Pumpe 34 über eine Leitung 40 mit dem Vorratsbehälter 6 verbunden. Die Pumpe kann auf diese Weise entweder Volumen aufnehmen, welches beim Entbremsen wieder aus der Betätigungskammer abfließt, oder auch direkt aus dem Reservoir kommendes Volumen an Hydraulikflüssigkeit. Auch eine Aufnahme an Bremsflüssigkeit aus beiden Richtungen ist möglich.

Um die Volumenaufnahme und Volumenabgabe, sowie das Speichern von Volumen an Hydraulikflüssigkeit zu ermöglichen und/oder durchzuführen ist zwischen die Kolben der Pumpe 34 und den Hydraulikspeicher 35 ein stromlos geschlossenes Schaltventil 37 geschaltet. Das Ventil 37 erlaubt in seiner Durchlassstellung einen Fluss an Hydraulikflüssigkeit in beide Richtungen. Ist das Ventil 37 als Sitzventil ausgeführt so kann es unterschiedliche Einbaupositionen aufweisen. Es kann vorgesehen sein, das Sitzventil 37 dann derart einzubauen, dass der Speicherdruck durch die Federkraft des Sitzventils begrenzt werden kann. Somit kann, beispielsweise bei thermischer Ausdehnung im Speicher ein unzulässiger Überdruck verhindert werden.

Zwischen dem Ventil 37 und dem Speicher 35 ist ein Drucksensor 38 angeschlossen, mittels dessen der Füllstand des Speichers sowie der Druckaufbau beziehungsweise der Druckabbau durch den Speicher überwacht werden kann. So kann beispielsweise anhand von Signalen des Drucksensors 38 der Druckaufbau sowie der Druckaufbau in der Betätigungskammer oder auch eine Befüllung des Speichers gesteuert werden. Die Signale des Drucksensors 38 können der Steuereinheit 5 über nicht gezeigte Signalleitungen zugeführt werden und von dieser zur Regelung des Bremssystems herangezogen werden. Zusätzlich zur Verbindung der Förderseite der Pumpe 34 mit dem Ventil 37 ist die Förderseite mit der Leitung 25 über eine Leitung 41 verbunden. Zur Unterbrechung der Leitung 41 befindet sich in die Leitung 41 ein Hydraulikventil 42 geschaltet. Das Ventil 42 ist ein stromlos offenes Regelventil, welches in seiner geschlossenen Stellung ein Rückschlagventil aufweist und so auch im geschlossenen Zustand einen Fluss an Bremsflüssigkeit von der Pumpe 34 oder dem Speicher 35 in Richtung der Leitung 25 je nach vorliegenden Druckniveaus vor und hinter dem Ventil 42 ermöglicht. Das Ventil 42 erlaubt in seiner Durchlassstellung einen Fluss an Hydraulikflüssigkeit in beide Richtungen. Durch das Ventil 42 ist eine Überdrucksicherung bei einem Befüllvorgang des Speichers durch das Kräftegleichgewicht zwischen Magnetkraft sowie der Hydraulikkraft auf die Sitzfläche des Ventils gegeben, indem der Ansteuerstrom des Ventils und somit die Magnetkraft begrenzt wird.

Zwischen dem Ventil 42 und der Betätigungskammer 22 ist ein Drucksensor 43 angeschlossen, mittels dessen ein Druckaufbau oder Druckabbau in der Betätigungskammer 22 überwacht, gesteuert und/oder geregelt werden kann. Durch das Regelventil 42 kann ein Druckaufbau in der Betätigungskammer 22 geregelt durchgeführt werden, indem die vom Hydraulikspeicher 35 zur Verfügung gestellte Hydraulikflüssigkeit unterschiedlich schnell, anhand der Stellung des Regelventils der Betätigungskammer zugeführt wird. So kann eine Druckaufbaudynamik eingestellt beziehungsweise variiert werden.

Dieselbe Funktionalität die beim Druckaufbau durch das Ventil 42 dargestellt wird ist bei einem Druckabbau durch das Ventil 44 darstellbar. Das Ventil 44 ist ein stromlos offenes Regelventil. Das Ventil 44 erlaubt in seiner Durchlassstellung einen Fluss an Hydraulikflüssigkeit in beide Richtungen.

Um den Druck in der Betätigungskammer 22 abzubauen ist das Ventil 44 über ein weiteres stromlos geschlossenes Schaltventil 45 mit der Leitung 45 verbunden. Das Ventil 45 erlaubt in seiner Durchlassstellung einen Fluss an Hydraulikflüssigkeit in beide Richtungen.

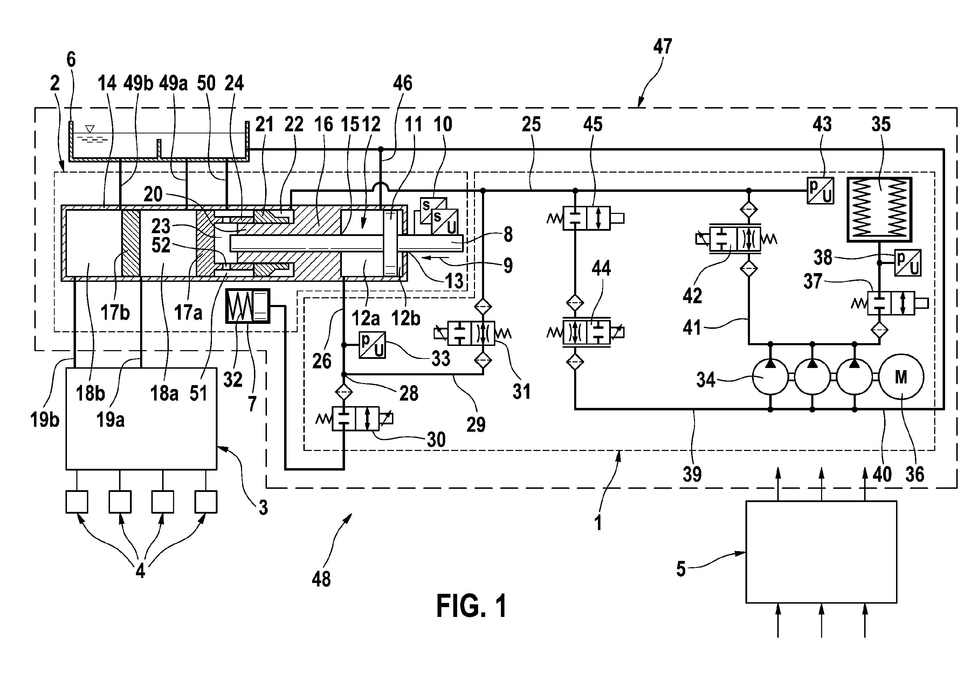

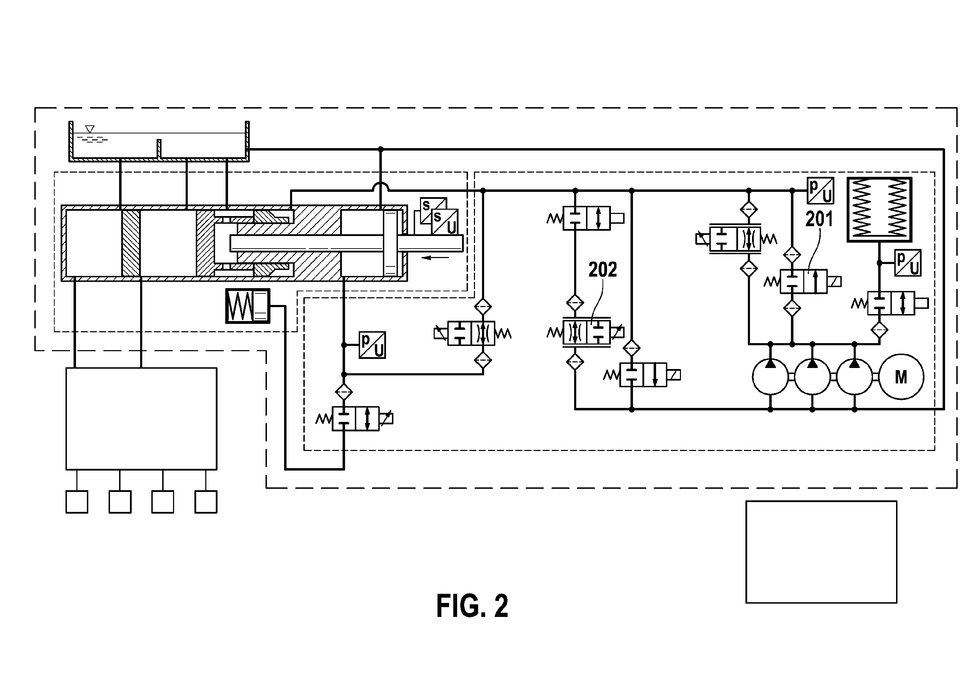

In einer weiteren Ausführungsform der Erfindung wie in Figur 2 dargestellt, weist die Drucksteuereinrichtung 1 im Vergleich zur ersten Ausführungsform ein weiteres Ventil 201 parallel zu dem Ventil 42 auf. In Figur2 gezeigte Elemente, die bereits in Figur 1 enthalten waren erhalten keine neuen Bezugszeichen. Das Ventil 201 ist ein Schaltventil mit einer Durchlassrichtung vom Hydraulikspeicher 35 in Richtung der Leitung 25. Das Ventil 201 ist stromlos geschlossen. Ebenso ist den Ventilen 44 und 45 ein zusätzliches Ventil 202 parallel geschaltet. Das Ventil 202 ist ebenfalls ein stromlos geschlossenes Schaltventil mit einer Durchlassrichtung von der Leitung 25 zu der Ansaugseite der Hydraulikpumpe 34.

Mittels der zusätzlichen Schaltventile 201 und 202 ein Transport größeren Volumina an Bremsflüssigkeit und damit verbunden ein höherer Druckgradient bei einem Druckaufbau und/oder Druckabbau in der Betätigungskammer 22 darstellbar. Es kann dabei vorgesehen sein, dass bei sehr hohen Druckgradienten auf die Regelventile 42 und 44 vollständig verzichtet wird, also diese nicht betätigt werden und zum Druckabbau und/oder Druckaufbau nur die Schaltventile 201 und/oder 202 genutzt werden. Ebenso kann für den schnellen Druckabbau vorgesehen sein, das Ventil 45 zusätzlich zu öffnen. Es ist ebenso möglich lediglich eines der zwei Ventile 201 oder 202 zusätzlich zu der in Figur 1 gezeigten Ausführungsform hinzuzufügen, wobei dann lediglich bei Druckaufbau oder Druckabbau und nicht bei beidem ein höherer Druckgradient bei der Druckeinstellung darstellbar ist.

In eine weiteren Ausführungsform die auf der in Figur 2 gezeigten Ausführungsform basiert, ist dem Regelventil 42 sowie dem Regelventil 44 ein weiteres Regelventil 301 beziehungsweise 302 parallel geschaltet. Die Ventile 301 und 302 besitzen in Ihren Durchlassstellungen einen Durchlass in beide Richtungen. Es ist ebenso möglich lediglich eines der zwei Ventile 301 oder 302 zusätzlich zu der in Figur 2 gezeigten Ausführungsform hinzuzufügen. Mittels der zusätzlichen Ventile 301 und/oder 302 kann eine Erhöhung des geregelten Volumenstroms realisiert werden.

Im Folgenden wird das Verfahren zum Betreiben der Drucksteuereinrichtung, insbesondere die Ventilstellung bei unterschiedlichen Betriebssituationen dargestellt.

Um den Speicher 35 mit der Pumpe 34 zu befüllen wird das Regelventil 42 bestromt und somit geschlossen und das Schaltventil 37 bestromt und somit geöffnet. Dadurch besteht eine hydraulische Verbindung zwischen Pumpe 34 und Hydraulikspeicher 35 und der Speicher kann geladen werden. Nach dem Aufladen des Speichers 35 werden beide Ventile wieder entstromt.

Ist der Speicher 34 aufgeladen so kann zur Durchführung einer Bremsung Hydraulikflüssigkeit aus dem Speicher, zum Druckaufbau in der Kammer 22 sowie dadurch verbunden zum Druckaufbau an den Radbremsen 4 der Betätigungskammer 22 zugeführt werden. Dazu wird das Ventil 37 bestromt, Hydraulikflüssigkeit kann aus dem Speicher austreten. Die Zufuhr an Bremsflüssigkeit aus dem Speicher 35 in die Betätigungskammer 22 kann durch das Ventil 42 geregelt werden. Wie gesagt kann der Druckaufbau mittels des Drucksensors 43 überwacht/ geregelt werden. Ist der Sollbremsdruck eingestellt, so wird das Ventil 37 wieder geschlossen. Das Ventil 30 wird bestromt und somit geöffnet und verbindet somit die erste Kammer 12 mit dem Pedalsimulator 7.

Soll der Bremsdruck an den Radbremsen 4 reduziert werden, so ist vorgesehen, dass das Ventil 45 geöffnet wird indem es bestromt wird. Dadurch kann Hydraulikflüssigkeit aus der Betätigungskammer zurück an die Ansaugseite der Pumpe 34 oder auch in das Reservoir fließen. Durch das Regelventil 44 kann der Druckaufbau dabei geregelt werden. Ist der Sollbremsdruck durch den Druckabbau eingestellt, so werden die Ventile 44 und 45 wieder entstromt. Das Ventil 30 bleibt bestromt und somit geöffnet und verbindet die erste Kammer 12 mit dem Pedalsimulator 7.

Je nach Ausführungsform der Drucksteuereinrichtung können die Ventile 201, 202, 301, 302 sowohl bei Druckaufbau als auch bei Druckabbau in der Betätigungskammer 22 entsprechend beteiligt werden indem sie entsprechend geschaltet / geregelt werden, wie bereits beschrieben.

Liegt ein Defekt an der Drucksteuereinrichtung 1 vor, so kann durch Schalten der Ventile 30 und 31 der Fahrer mittels einer von ihm aufgebrachten Kraft an der Bremsung beteiligt werden und den ersten Kolben mit einer Kraft beaufschlagen. Dazu wird dann der Fahrer, insbesondere die erste Kammer 12 durch Entstromen und somit Schließen des Ventils 30 von dem Pedalsimulator abgekoppelt. Der Fahrer kann nun Volumen aus der ersten Kammer 12 direkt in die Betätigungskammer 22 verschieben und dort einen Druck aufbauen. Das Ventil 31 bleibt während den oben beschriebenen normalen Bremsvorgänge, also Druckabbau beziehungsweise Druckaufbau geschlossen. Dadurch wird verhindert, dass Bremsflüssigkeit von dem Hydraulikspeicher 35 unter hohem Druck in die erste Kammer 12 gelangt und somit der Fahrer eine ungewollte / ungewohnte Rückwirkung erfährt.

Durch die Möglichkeit den Druck in der Betätigungskammer 22 durch die Drucksteuereinrichtung 1 einzustellen kann der Bremsdruckgeber 2, zusammen mit der Drucksteuereinrichtung 1 in einer Gesamtbremsanlage zur Anwendung kommen, die neben dem hydraulischen Bremssystem 48 ein weiteres, beispielsweise regeneratives Bremssystem umfasst. Ändert sich der Anteil des regenerativen Bremssystems an der Gesamtbremswirkung, welche beispielsweise vom Fahrer vorgegeben ist, so muss die Bremswirkung des hydraulischen Bremssystems an die Änderung der Bremswirkung des regenerativen Bremssystems, insbesondere an die nach der Änderung vorliegende Bremswirkung des regenerativen Bremssystems angepasst werden. Dazu kann der Druck in der Betätigungskammer 22 des Druckgebers 2 durch die Drucksteuereinrichtung 1 reduziert oder erhöht werden um somit die hydraulische Bremswirkung anzupassen. Die Änderung des Anteils des regenerativen Teils der Gesamtbremsanlage an der Bremswirkung kann ein Hinzuschalten oder Abschalten des regenerativen Teils sein, jedoch ebenso eine Änderung der regenerativen Bremswirkung auf Grund einer sich verändernden Fahrzeuggeschwindigkeit oder eines Füllstands eines Energiespeichers, der die Energie beim regenerativen Bremsen aufnimmt.

Die Gesamtbremsanlage weist ein Steuergerät 5 auf, welches der Steuerung der Gesamtbremsanlage dient. So werden dem Steuergerät 5 beispielsweise mindestens die Signale der Sensoreinheit 10 zugeführt, über hier nicht eingezeichnete Daten und / oder Signalverbindungen. Somit steht dem Steuergerät der Fahrerbremswunsch zur Verfügung. Des Weiteren liegen im Steuergerät Signale der Drucksensoren 33, 43 und 38 vor. Wie bereits beschrieben kann die Bremsbetätigung sowie der Füllstand des Speichers anhand dieser Signale überwacht werden. Des Weiteren steuert und/oder regelt die Steuereinheit die in der Drucksteuereinrichtung 1 vorhandenen Schalt- und Regelventile. Auf diese Weise kann durch die Steuereinheit ein Druckaufbau und ein Druckabbau durch die Drucksteuereinrichtung gesteuert werden. Die Drucksteuereinrichtung 5 stellt dabei durch passendes Stellen der Ventile die Hydraulikpfade zum Druckaufbau zwischen Hydraulikspeicher 35 und Betätigungskammer 22 her, beim Druckabbau zwischen Betätigungskammer 22 und der Ansaugseite der Pumpe 34 sowie des Reservoirs 6. Ebenso kann durch passendes Schalten der Ventile, welche die Leitung 25 mit der ersten Kammer 12 sowie dem Pedalsimulator 7 verbinden, die Steuereinheit 5 die Drucksteuereinrichtung in einen Notfallmodus schalten, beispielsweise bei einer Leckage des Speichers, oder einem Defekt der Pumpe.

Des Weiteren können mittels des Steuergeräts 5 weitere Teile der Gesamtbremsanlage gesteuert werden, so zum Beispiel das Hydraulikaggregat 3 oder auch der regenerative Teil der Gesamtbremsanlage.

Das Steuergerät 5 ermöglicht es den Druckgeber 2 zusammen mit Drucksteuereinrichtung 1 aktiv zu betreiben. Dazu kann die Steuereinheit 5 Signale zur Steuerung verwenden, die nicht vom Fahrer vorgegeben werden. Vorstellbare Funktionen dafür sind eine Automatische Notbremsung, Bremseingriffe zur Abstandskontrolle zu vorausfahrenden Fahrzeugen oder auch Funktionen wie ein Bremsscheibenwischer.

Das Steuergerät 5 kann separat von einem weiteren Steuergerät des Fahrzeugs vorgesehen sein, ebenso gut kann es als Untereinheit eines Fahrzeugsteuergeräts vorgesehen sein.

Unter Druckaufbau und / oder Druckabbau in der Betätigungskammer ist in dieser Anmeldung selbstverständlich auch ein Druckhalten zu verstehen. Ebenso kann beispielsweise ein Protokoll vorgesehen sein, dass heißt ein zeitlicher Ablauf an Phasen die auf Druckaufbau, Druckhalten und Druckabbau, auch in wechselnder Reihenfolge, bestehen.

Betätigt ein Fahrer das Bremspedal, so wird entsprechend der Stellung des Bremspedals der Druck in der Betätigungskammer aufgebaut, wird die Position des Bremspedals beibehalten, so wird der Druck in der Betätigungskammer gehalten, reduziert der Fahrer die Betätigungsposition des Bremspedals, also den Bremswunsch, so wird ein Druckabbau in der Betätigungskammer durchgeführt.

Aktive Druckaufbauten mittels der Betätigungseinheit sind auf diese Weise ebenfalls realisierbar, beispielsweise Bremsdruckeinstellung unabhängig von der Betätigung des Bremspedals im Rahmen einer automatischen Folgefahrt oder im Rahmen von Komfortfunktionen wie beispielsweise Bremsscheibenwischer.

Die Beschreibung der Betätigungseinheit 47 als Einheit ist nicht als Einheit im baulichen Sinne zu verstehen. Die Grundelemente, also der Druckgeber 2, die Drucksteuereinrichtung 1, der Pedalsimulator 7 sowie das Reservoir 6 können sowohl als bauliche Einheit, als auch als einzelne Bauteile vorliegen, die in der in der Beschreibung genannten Art und Weise zur Bremsung des Fahrzeugs zusammenwirken.

## Patentansprüche

1. Betätigungseinheit (47) für ein hydraulisches Bremssystem (48), wobei die Betätigungseinheit einen Bremsdruckgeber (2) sowie eine Drucksteuereinrichtung (1) zur Druckeinstellung in einer Betätigungskammer (22) des Bremsdruckgebers (2) umfasst, wobei die Drucksteuereinrichtung (1) mit dem Bremsdruckgeber (2) hydraulisch verbunden ist, wobei die Drucksteuereinrichtung (1)
- wenigstens ein erstes Schaltventil (37) sowie wenigstens ein erstes Regelventil (42) aufweist, mittels derer ein Druck in der Betätigungskammer (22) aufgebaut wird,
- wenigstens ein zweites Schaltventil (45) sowie wenigstens ein zweites Regelventil(44), mittels derer ein Druck in der Betätigungskammer (22) abgebaut wird.

2. Betätigungseinheit (47) nach Anspruch 1, wobei die Drucksteuereinrichtung (1) wenigstens ein drittes Schaltventil (30) sowie wenigstens ein drittes Regelventil (31) aufweist, mittels derer die Drucksteuereinrichtung (1) in einen von wenigstens zwei Betriebsmodi geschaltet wird.

3. Betätigungseinheit (47) nach Anspruch 2, **dadurch gekennzeichnet, dass** das erste (42), zweite (44) und dritte (31) Regelventil ein stromlos offenes Regelventil ist.

4. Betätigungseinheit (47) nach Anspruch 2, **dadurch gekennzeichnet, dass** das erste, zweite und dritte Schaltventil (37, 45,30) ein stromlos geschlossenes Schaltventil ist.

5. Betätigungseinheit (47) nach Anspruch 2, **dadurch gekennzeichnet, dass** die Drucksteuereinrichtung (2)
- zum Druckaufbau ein viertes Schaltventil (201) und/oder
- zum Druckabbau ein fünftes Schaltventil (202) aufweist,
wobei das vierte (201) und fünfte (202) Schaltventil ein stromlos geschlossenes Schaltventil ist.

6. Betätigungseinheit (47) nach Anspruch 5, **dadurch gekennzeichnet, dass** die Drucksteuereinrichtung (2)
- zum Druckaufbau ein viertes Regelventil (301) und/oder
- zum Druckabbau ein fünftes Regelventil (302) aufweist,
wobei das vierte (301) und fünfte (302) Regelventil ein stromlos geöffnetes Regelventil ist.

7. Betätigungseinheit (47) nach Anspruch 1, **dadurch gekennzeichnet, dass** die Drucksteuereinrichtung (2) eine Fluidspeichervorrichtung (35) sowie eine Fluidfördervorrichtung (34) umfasst,
- wobei die Fluidspeichervorrichtung (35) durch die Fluidfördervorrichtung (34) geladen wird, wobei zur Aufnahme von Hydraulikflüssigkeit das erste Schaltventil (37) geöffnet wird sowie das erste Regelventil (42) geschlossen wird-,
- und wobei das erste Schaltventil (37) zum Halten von Hydraulikflüssigkeit geschlossen wird.

8. Betätigungseinheit (47) nach Anspruch 2, **dadurch gekennzeichnet, dass**
- in dem ersten Betriebsmodus das dritte Schaltventil (30) geöffnet wird, wobei das dritte Regelventil (31) geschlossen wird und die Drucksteuereinrichtung (2) den Druck in der Betätigungskammer (22) einstellt und/oder
- in dem zweiten Betriebsmodus das dritte Schaltventil (30) geschlossen sowie das dritte Regelventil (31) geöffnet wird, wobei der Fahrer den Druck in der Betätigungskammer (22) einstellt.

9. Betätigungseinheit (47) nach Anspruch 8, **dadurch gekennzeichnet, dass** in dem ersten Betriebsmodus der Fahrer einen Pedalsimulator (7) der Betätigungseinheit (47) betätigt.

10. Betätigungseinheit (47) nach wenigstens einem der Ansprüche 2, 5 und/oder 6 **dadurch gekennzeichnet, dass** der Druck in der Betätigungskammer (22) im ersten Betriebsmodus durch selbsttätiges Abgeben von Hydraulikfluid aus der Fluidspeichervorrichtung aufgebaut wird.

11. Betätigungseinheit (47) nach Anspruch 1, **dadurch gekennzeichnet, dass** die Betätigungseinheit mit einer Druckmodulationseinheit (3) des hydraulischen Bremssystems (48) verbunden ist.

12. Betätigungseinheit (47) nach Anspruch 1, **dadurch gekennzeichnet, dass** das hydraulische Bremssystem (48) Teil einer Gesamtbremsanlage ist, die neben dem hydraulischen Bremssystem (48) ein weiteres Bremssystem, insbesondere ein regeneratives Bremssystem aufweist, wobei durch Einstellen eines Drucks in der Betätigungskammer (22) des Bremsdruckgebers (2) mittels der Drucksteuereinrichtung (1) die Bremswirkung des hydraulischen Bremssystems an die Bremswirkung des regenerativen Bremssystems angepasst wird.

13. Betätigungseinheit (47) nach Anspruch 12, **dadurch gekennzeichnet, dass** die Gesamtbremswirkung der Gesamtbremsanlage durch Betreiben der Drucksteuereinrichtung (2), zumindest annähernd, konstant gehalten wird.

14. Steuergerät zum Betreiben der Betätigungseinheit (47) sowie des hydraulischen Bremssystems (48) nach wenigstens einem der vorhergehenden Ansprüche, wobei das Steuergerät durch Stellen wenigstens eines der Ventile der Drucksteuereinrichtung (22):
- den Druckaufbau sowie den Druckabbau in der Betätigungskammer (22) mittels der Drucksteuereinrichtung (1) steuert,
- das Aufladen der Fluidspeichervorrichtung (35) mittels der Fluidfördervorrichtung (34) steuert, wobei das Steuergerät den Motor (36) steuert,
- die Drucksteuereinrichtung (2) in einen ersten oder zweiten Betriebsmodus schaltet und/oder
- wobei das Steuergerät den in der Betätigungskammer (22) einzustellenden Druck anhand wenigstens einer Sensoreinheit (10, 33) des Bremsdruckgebers (2) ermittelt und den einzustellenden Druck in der Betätigungskammer (22) einstellt.

15. Steuergerät nach Anspruch 14, **dadurch gekennzeichnet dass** die Druckeinstellung in der Betätigungskammer (22) durch das Steuergerät, das Befüllen der Fluidspeichervorrichtung (35) und/oder das Ermitteln des einzustellenden Drucks in der Betätigungskammer mittels Signalen wenigstens einer Sensoreinheit (37, 43, 33, 10) erfolgt.

16. Verfahren zum Betreiben einer Betätigungseinheit (47) für ein hydraulisches Bremssystem (48),
- wobei die Betätigungseinheit (47) einen Bremsdruckgeber (2) sowie eine Drucksteuereinrichtung (1) umfasst, wobei der Bremsdruckgeber eine Betätigungskammer (22) umfasst, wobei die Drucksteuereinrichtung (1) wenigstens ein erstes Schaltventil (37), wenigstens ein erstes Regelventil (42) aufweist, wenigstens ein zweites Schaltventil (45) sowie wenigstens ein zweites Regelventil(44) aufweist,
- wobei ein Druck in einer Betätigungskammer (22) des Bremsdruckgebers (2) durch die Drucksteuereinrichtung (1) eingestellt wird,
indem die Drucksteuereinrichtung mit dem Bremsdruckgeber (2) hydraulisch verbunden wird, und über
- das wenigstens eine erste Schaltventil (37) sowie das wenigstens eine erste Regelventil (42) ein Druck in der Betätigungskammer (22) aufgebaut wird, und/oder
- das wenigstens eine zweite Schaltventil (45) sowie das wenigstens eine zweite Regelventil(44), ein Druck in der Betätigungskammer (22) abgebaut wird.

17. Verfahren nach Anspruch 16, **dadurch gekennzeichnet, dass** die Drucksteuereinrichtung (1) wenigstens ein drittes Schaltventil (30) sowie wenigstens ein drittes Regelventil (31) aufweist und dass mittels des wenigstens einen dritten Schaltventils (30) sowie des wenigstens einen dritten Regelventils (31) die Betätigungseinheit (47) in einen von wenigstens zwei Betriebsmodi geschaltet wird.
